# EUROPEAN PATENT APPLICATION

(11) **EP 4 778 702 A1**
(43) Date of publication of application: **22.07.2026**
(21) Application number: 23952200.6
(22) Date of filing: 12.09.2023
(51) Int. Cl.: B29C 64/393, B22F 10/14, B22F 12/90, B28B 1/30, B29C 64/165, B33Y 30/00, B33Y 50/02

(54) **THREE-DIMENSIONAL SHAPING DEVICE**

(71) Applicant: Roland DG Corporation, Shizuoka 431-2103 (JP)
(72) Inventor: TAKANO, Takafumi, Hamamatsu-shi, Shizuoka 431-2103 (JP); ICHIKAWA, Hiromu, Hamamatsu-shi, Shizuoka 431-2103 (JP); KOYAMA, Tsukasa, Hamamatsu-shi, Shizuoka 431-2103 (JP); SUGIMOTO, Koki, Hamamatsu-shi, Shizuoka 431-2103 (JP); IWASE, Fumiyoshi, Hamamatsu-shi, Shizuoka 431-2103 (JP)
(74) Representative: Grünecker Patent- und Rechtsanwälte PartG mbB
(86) International application number: PCT/JP2023/033245
(87) International publication number: WO 2025/057306

(57) **Abstract**

A three-dimensional shaping device 10 includes a powder supply device 20 supplying a powder material 200; a shaping tank 30 including a shaping table 32 configured to move in an up-down direction, the shaping table 32 having a shaped item 230 shaped thereon of the powder material 200; a layer formation device 50, 80 flattening the powder material 200, supplied by the powder supply device 20, on the shaping table 32; an injection head 60 injecting a curing liquid, curing the powder material 200, onto the powder material 200 on the shaping table 32; a controller 90 controlling the powder supply device 20, the shaping tank 30, the layer formation device 50, 80 and the injection head 60; and an operation box 100 connected with the controller 90 in a wired or wireless manner. The operation box 100 includes footstep switches 101 through 106 capable of operating, via the controller 90, at least one of the powder supply device 20, the shaping tank 30, the layer formation device 50, 80 and the injection head 60 when being stepped on.

## Description

### Technical Field

The present invention relates to a three-dimensional shaping device.

### Background Art

A device injecting a curing liquid onto a powder material to form a thin cured layer having a desired cross-sectional shape and stacking such cured layers to produce a three-dimensional shaped item is conventionally known. For example, Patent Literature 1 discloses a three-dimensional shaping device including a shaping tank in which a three-dimensional shaped item is produced, a supply tank holding a powder material to be supplied to the shaping tank, a spreading roller transferring the powder material from the supply tank to the shaping tank to form a powder layer, a head unit injecting a curing liquid curing the powder material onto the powder layer on the shaping tank, and an operation panel operable by a user.

### Citation List

### Patent Literature

Patent Literature 1 : Japanese Patent Application Publication No. 2019-072967

### Summary of Invention

### Technical Problem

There may be a case where the user wishes to manually operate components in a three-dimensional shaping device. In a three-dimensional shaping device as described in Patent Literature 1, by which a powder material is cured, there may be a case where the user wishes to manually operate the three-dimensional shaping device immediately after, for example, handling the powder material. In such a case, the user touches the operation panel or the like for the manual operation and as a result, the powder material attached to the user may undesirably be transferred in a large amount to the three-dimensional shaping device.

The present invention, made in light of such a point, has an object of providing a three-dimensional shaping device suppressing such attachment of a powder material, which may otherwise be occurred by the three-dimensional shaping device being operated.

### Solution to Problem

A three-dimensional shaping device disclosed therein includes a powder supply device supplying a powder material; a shaping tank including a shaping table configured to move in an up-down direction, the shaping table having a shaped item shaped thereon of the powder material; a layer formation device flattening the powder material, supplied by the powder supply device, on the shaping table; an injection head injecting a curing liquid, curing the powder material, onto the powder material on the shaping table; a controller controlling the powder supply device, the shaping tank, the layer formation device and the injection head; and an operation box connected with the controller in a wired or wireless manner. The operation box includes footstep switches capable of operating, via the controller, at least one of the powder supply device, the shaping tank, the layer formation device and the injection head when being stepped on.

According to the above-described three-dimensional shaping device, the operation box operating at least one of the powder supply device, the shaping tank, the layer formation device and the injection head is operable by the footstep switches being stepped on by a foot. Even though the user handles the powder material, the amount of the powder material attached to his/her foot is small in many cases. Therefore, the above-described three-dimensional shaping device suppresses the attachment of the powder material thereto, which may otherwise be occurred by the three-dimensional shaping device being operated.

### Brief Description of Drawings

[Fig. 1] Fig. 1 is a perspective view of a three-dimensional shaping device according to an embodiment.
[Fig. 2] Fig. 2 is a plan view of the three-dimensional shaping device.
[Fig. 3] Fig. 3 is a cross-sectional view of the three-dimensional shaping device as seen from a rear side thereof.
[Fig. 4] Fig. 4 is a block diagram of the three-dimensional shaping device.
[Fig. 5] Fig. 5 is a perspective view of an operation box.
[Fig. 6] Fig. 6 is a side view of the operation box.

### Description of Embodiments

Hereinafter, a three-dimensional shaping device according to embodiments of the present invention will be described with reference to the drawings. The embodiments described herein are, of course, not intended to particularly limit the present invention. The drawings are schematic and do not necessarily reflect the actual proportion or the like. Elements and portions having the same functions are denoted by the same reference signs, and description for the same elements and portions will be omitted or simplified as appropriate.

### [Configuration of the three-dimensional shaping device]

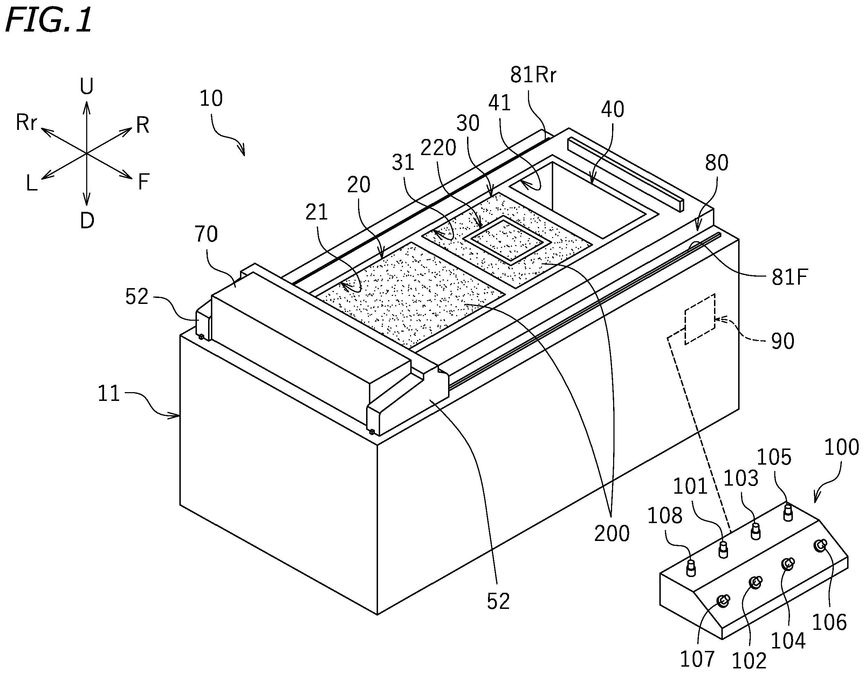

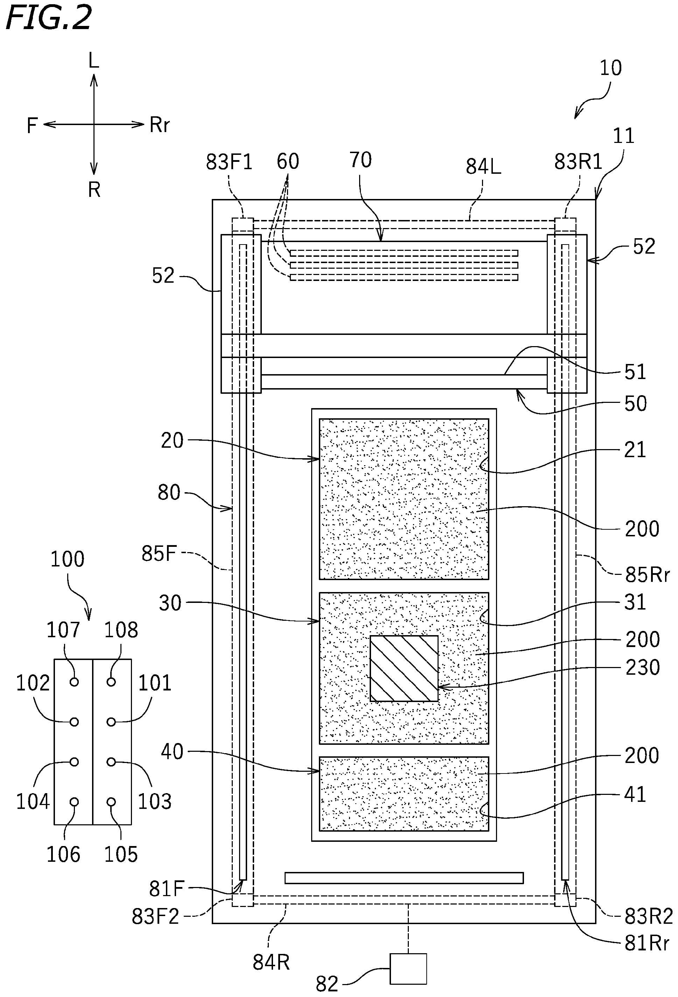

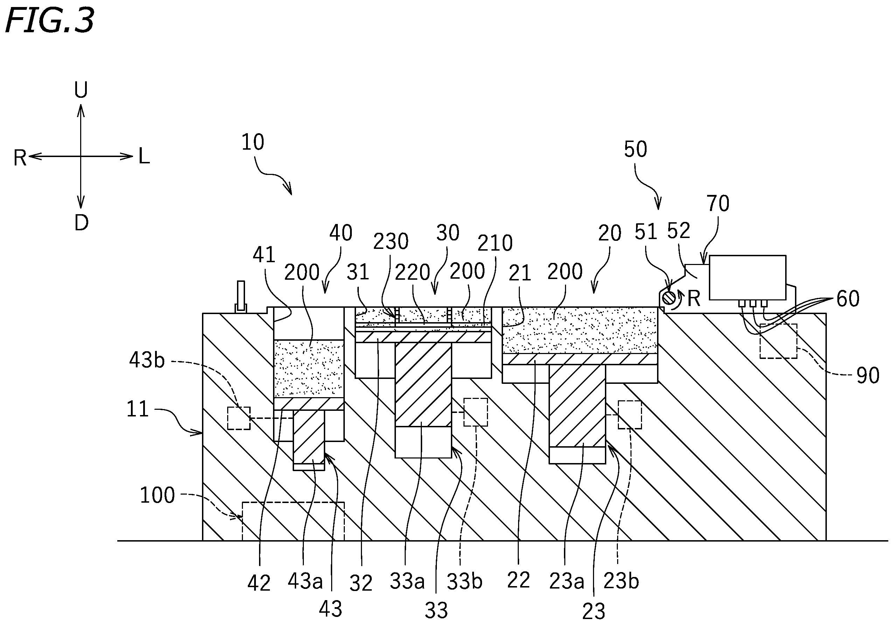

Fig. 1 is a perspective view of a three-dimensional shaping device 10 according to an embodiment. Fig. 2 is a plan view of the three-dimensional shaping device 10. Fig. 3 is a cross-sectional view of the three-dimensional shaping device 10 as seen from a rear side thereof. In the drawings, arrow F represents a forward direction, and arrow Rr represents a rearward direction. Herein, left, right, up and down of the three-dimensional shaping device 10 are respectively left, right, up and down in the case where the three-dimensional shaping device 10 is seen in a direction of arrow F. In the drawings, letters L, R, U and D respectively represent left, right, up and down.

As shown in Fig. 1 through Fig. 3, the three-dimensional shaping device 10 includes a main body 11, a supply tank 20, a shaping tank 30, a recovery tank 40, a roller unit 50, injection heads 60, a carriage 70 holding the roller unit 50 and the injection heads 60, a moving device 80 moving the carriage 70, a controller 90, and an operation box 100 wirelessly connected with the controller 90. The three-dimensional shaping device 10 flattens a powder material 200, supplied from the supply tank 20, on the shaping tank 30 to form a powder layer 210, and injects a curing liquid onto a desired site in the powder layer 210 to cure the powder layer 210 and thus to form a cured layer 220. The three-dimensional shaping device 10 stacks such cured layers 220 upward to produce a shaped item 230.

As shown in Fig. 1, the main body 11 is an outer housing of the three-dimensional shaping device 10 and is long in a left-right direction. The main body 11 houses the supply tank 20, the shaping tank 30, the recovery tank 40 and the controller 90. As shown in Fig. 1, the main body 11 supports the carriage 70 and the moving device 80.

The supply tank 20 is located in a left area of the main body 11. The supply tank 20 stores the powder material 200 before the powder material 200 is supplied to the shaping tank 30. The supply tank 20 is an example of powder supply device supplying the powder material 200, which is a material of the shaped item 230. As shown in Fig. 3, the supply tank 20 includes a column-like portion 21, a supply table 22 and a supply table elevation device 23.

The column-like portion 21 has a column-like shape extending in an up-down direction. The column-like portion 21 has a top opening. As shown in Fig. 2, the column-like portion 21 is rectangular as seen in a plan view. Note that the planar shape of the column-like portion 21 is not limited to a rectangular shape. As shown in Fig. 3, the column-like portion 21 houses the supply table 22 having the same shape as that of the column-like portion 21 as seen in a plan view. The supply table 22 is inserted into the column-like portion 21 substantially horizontally. As shown in Fig. 3, the supply table 22 is shaped like a flat plate. On the supply table 22, the powder material 200 is to be placed. The supply table 22 is configured to move in the up-down direction along inner surfaces of the column-like portion 21.

The supply table elevation device 23 is provided below the supply table 22. The supply table elevation device 23 supports and moves the supply table 22 up and down. The supply table elevation device 23 includes a support member 23a, an elevation motor 23b, and a ball screw not shown. The support member 23a is connected with a bottom surface of the supply table 22. The support member 23a is connected with the elevation motor 23b via the ball screw. The elevation motor 23b is driven to move the support member 23a in the up-down direction. The supply table 22 is supported by the support member 23a, and moves in the up-down direction together with the support member 23a. The elevation motor 23b is electrically connected with the controller 90 and is controlled by the controller 90. The elevation motor 23b is, for example, a servo motor, and is configured to be capable of controlling the level of the supply table 22.

There is no specific limitation on the composition, the form or the like of the powder material 200. The powder material 200 may be formed of any powder containing any of various materials including resin materials, metal materials, inorganic materials and the like. Examples of the material of the powder material 200 include ceramic materials such as alumina, silica, titania, zirconia and the like; iron, aluminum, titanium, and alloys thereof (typically, stainless steel, titanium alloys, aluminum alloys); hemihydrate gypsum (α-type gypsum, β-type gypsum); apatite; sodium chloride; plastic materials; and the like. These materials may be used independently, or as a combination of two or more thereof.

As shown in Fig. 2, the shaping tank 30 is located to the right of the supply tank 20. The supply tank 20 and the shaping tank 30 are lined up in the left-right direction. The shaping tank 30 is aligned with the supply tank 20 in a front-rear direction. As shown in Fig. 3, the shaping tank 30 includes a column-like portion 31, a shaping table 32, and a shaping table elevation device 33.

The column-like portion 31 has a column-like shape extending in the up-down direction. As shown in Fig. 2, the column-like portion 31 has a top opening. The column-like portion 31 is rectangular as seen in a plan view. Note that the planar shape of the column-like portion 31 is not limited to a rectangular shape. As shown in Fig. 3, the column-like portion 31 houses the shaping table 32 having the same shape as that of the column-like portion 31 as seen in a plan view. The shaping table 32 is inserted into the column-like portion 31 substantially horizontally. As shown in Fig. 3, the shaping table 32 is shaped like a flat plate. The shaping table 32 is a member on which the shaped item 230 is to be produced of the powder material 200. The shaping table 32 is configured to move in the up-down direction along inner surfaces of the column-like portion 31.

The shaping table elevation device 33 is provided below the shaping table 32. The shaping table elevation device 33 supports and moves the shaping table 32 up and down. The shaping table elevation device 33 includes a support member 33a, an elevation motor 33b, and a ball screw not shown. The support member 33a is connected with a bottom surface of the shaping table 32. The support member 33a is connected with the elevation motor 33b via the ball screw. The elevation motor 33b is driven to move the support member 33a in the up-down direction. The shaping table 32 is supported by the support member 33a, and moves in the up-down direction together with the support member 33a. The elevation motor 33b is electrically connected with the controller 90 and is controlled by the controller 90. The elevation motor 33b is, for example, a servo motor, and is configured to be capable of controlling the level of the shaping table 32.

As shown in Fig. 2, the recovery tank 40 is located to the right of the shaping tank 30. The supply tank 20, the shaping tank 30 and the recovery tank 40 are lined up in this order in the left-right direction. The recovery tank 40 is aligned with the supply tank 20 and the shaping tank 30 in the front-rear direction. As shown in Fig. 3, the recovery tank 40 includes a column-like portion 41, a recovery table 42, and a recovery table elevation device 43.

The column-like portion 41 has a column-like shape extending in the up-down direction. As shown in Fig. 2, the column-like portion 41 has a top opening. The column-like portion 41 is rectangular as seen in a plan view. Note that the planar shape of the column-like portion 41 is not limited to a rectangular shape. As shown in Fig. 3, the column-like portion 41 houses the recovery table 42 having the same shape as that of the column-like portion 41 as seen in a plan view. The recovery table 42 is inserted into the column-like portion 41 substantially horizontally. As shown in Fig. 3, the recovery table 42 is shaped like a flat plate. Onto the recovery table 42, a remaining portion, of the powder material 200 transported by a stacking roller 51 (described below) of the roller unit 50, that remains after a portion of the powder material 200 is flattened on the shaping table 32 is to be dropped. In this embodiment, the recovery table 42 is also configured to move in the up-down direction along inner surfaces of the column-like portion 41.

The recovery table elevation device 43 is provided below the recovery table 42. The recovery table elevation device 43 includes a support member 43a, an elevation motor 43b, and a ball screw not shown. The support member 43a is connected with a bottom surface of the recovery table 42. The support member 43a is connected with the elevation motor 43b via the ball screw. The elevation motor 43b is driven to move the support member 43a in the up-down direction. The recovery table 42 is supported by the support member 43a, and moves in the up-down direction together with the support member 43a. The elevation motor 43b is electrically connected with the controller 90 and is controlled by the controller 90. The elevation motor 43b is, for example, a servo motor, and is configured to be capable of controlling the level of the recovery table 42.

The moving device 80 moves the carriage 70 in a direction in which the supply tank 20, the shaping tank 30 and the recovery tank 40 are lined up; that is, in this embodiment, in the left-right direction. As shown in Fig. 2, the moving device 80 includes a pair of guide rails 81F and 81Rr and a feed motor 82. The pair of guide rails 81F and 81Rr extend in the left-right direction and are lined up in the front-rear direction. The carriage 70 is slidably engaged with the pair of guide rails 81F and 81Rr. The carriage 70 moves in the left-right direction along the pair of guide rails 81F and 81Rr.

The moving device 80 includes pulleys 83F1 and 83F2 respectively located at a left end and a right end of the front guide rail 81F, pulleys 83R1 and 83R2 respectively located at a left end and a right end of the rear guide rail 81Rr, a left coupling rod 84L coupling the pulley 83F1 and the pulley 83R1, a right coupling rod 84R coupling the pulley 83F2 and the pulley 83R2, a front belt 85F wound along the pulley 83F1 and the pulley 83F2, and a rear belt 85Rr wound along the pulley 83R1 and the pulley 83R2. The feed motor 82 rotates the right coupling rod 84R. The belts 85F and 85Rr are secured to the carriage 70. When the feed motor 82 is driven, the coupling rod 84R rotates and the front and rear belts 85F and 85Rr run. As a result, the carriage 70 moves in the left-right direction along the guide rails 81F and 81Rr.

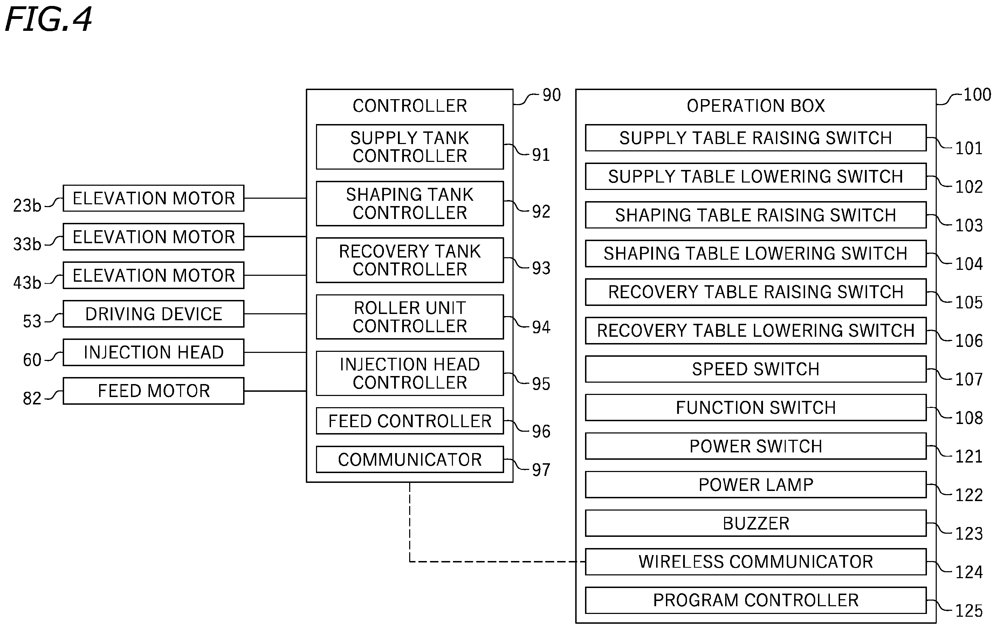

The roller unit 50 is mounted on the carriage 70. As shown in Fig. 2, the roller unit 50 includes the stacking roller 51, a pair of roller support members 52 supporting the stacking roller 51, and a driving device 53 (see Fig. 4) rotating the stacking roller 51. As shown in Fig. 3, the stacking roller 51 is located above the main body 11. The stacking roller 51 pushes and transports the powder material 200 from the supply table 22 to the shaping tank 30 and spreads the powder material 200 in the shaping tank 30. The stacking roller 51 is located to the right of the injection heads 60 (to the front of the injection heads 60 in a direction in which the stacking roller 51 moves to spread the powder material 200 in the shaping tank 30). The stacking roller 51 has a lengthy column-like shape extending in the front-rear direction. The stacking roller 51 is longer than the shaping tank 30 in the front-rear direction. The stacking roller 51 is provided at a predetermined level above the supply tank 20 and the shaping tank 30. A bottom end of the stacking roller 51 is positioned slightly above the supply tank 20 and the shaping tank 30 so as to form a predetermined clearance (gap) between the stacking roller 51 and the supply table 22/the shaping table 32.

The driving device 53 rotates the stacking roller 51 around an axis thereof. While the staking roller 51 spreads the powder material 200 in the shaping tank 30, the driving device 53 rotates the stacking roller 51 in a direction opposite to a moving direction in which the roller unit 50 moves with respect to the shaping tank 30 (in this embodiment, the moving direction of the roller unit 50 is rightward, and the stacking roller 51 is rotated in a direction of arrow R in Fig. 3).

The moving device 80 moves the carriage 70 and also the stacking roller 51 in the left-right direction. The moving device 80 and the roller unit 50 form a layer formation device that flattens the powder material 200, placed on the supply table 22, on the shaping tank 30.

The injection heads 60 are provided on the carriage 70. The injection heads 60 inject a curing liquid, curing the powder material 200, onto the powder material 200 on the shaping table 32. The injection heads 60 inject the curing liquid downward. The injection heads 60 include a plurality of nozzles (not shown) lined up in the front-rear direction, each of the plurality of nozzles injecting the curing liquid. The injection heads 60 are moved in the left-right direction together with the carriage 70 by the moving device 80. A combination of the movement of the injection heads 60 in the left-right direction by the moving device 80 and the injection of the curing liquid by the nozzles allows the curing liquid to land on a desired position on the shaping table 32. There is no specific limitation on the injection mechanism of the curing liquid by the injection heads 60. For example, an inkjet method is preferably usable. The injection heads 60 are electrically connected with the controller 90 and are controlled by the controller 90.

There is no specific limitation on the curing liquid as long as the curing liquid fixes particles of the powder material 200 to each other. As the curing liquid, any of various liquids (encompassing viscous materials) capable of fixing the particles contained the powder material 200 to each other is usable in accordance with the type of the powder material 200. Examples of the curing liquid include liquids including water, wax, binder, and the like. In the case where the powder material 200 contains a water-soluble resin as a subsidiary material, a liquid capable of dissolving the water-soluble resin, for example, water, is usable as the curing liquid. There is no specific limitation on the type of the water-soluble resin. Examples of the water-soluble resin include starch, polyvinyl alcohol (PVA), polyvinylpyrrolidone (PVP), water-soluble acrylic resins, water-soluble urethane resins, water-soluble polyamide, and the like.

Fig. 4 is a block diagram of the three-dimensional shaping device 10. As shown in Fig. 4, the controller 90 is electrically connected with the elevation motor 23b of the supply tank 20, the elevation motor 33b of the shaping tank 30, the elevation motor 43b of the recovery tank 40, the driving device 53 of the roller unit 50, the injection heads 60 and the feed motor 82 of the moving device 80, and controls operations of these components.

There is no specific limitation on the configuration of the controller 90. The controller 90 is, for example, a microcomputer. There is no specific limitation on the hardware configuration of the microcomputer. For example, the microcomputer includes an interface (I/F) receiving shaping data or the like from an external device such as a host computer or the like, a central processing unit (CPU) executing commands of a control program, a ROM (read only memory) storing a program to be executed by the CPU, a RAM (random access memory) used as a working area in which the program is developed, and a storage device such as a memory or the like storing the above-mentioned program or various types of data. The controller 90 does not need to be provided in the main body 11, and may include, for example, a computer or the like installed outside the main body 11 and communicably connected with a control device in the main body 11 in a wired or wireless manner.

As shown in Fig. 4, the controller 90 includes a supply tank controller 91 controlling the operation of the elevation motor 23b of the supply tank 20, a shaping tank controller 92 controlling the operation of the elevation motor 33b of the shaping tank 30, a recovery tank controller 93 controlling the operation of the elevation motor 43b of the recovery tank 40, a roller unit controller 94 controlling the operation of the driving device 53 of the roller unit 50, an injection head controller 95 controlling the operation of the injection heads 60, a feed controller 96 controlling the operation of the feed motor 82 of the moving device 80, and a communicator 97 performing wireless communication with a wireless communicator 124 (described below) of the operation box 100. The controller 90 may include another processor, but such a processor is not shown or described herein.

The operation box 100 is an operation tool capable of operating the supply tank 20, the shaping tank 30 and the recovery tank 40 via the controller 90. The operation box 100 is separate from the main body 11 of the three-dimensional shaping device 10. The configuration of the operation box 100 will be described in detail below.

### [Overview of the shaping process]

The three-dimensional processing device 10 produces the shaped item 230 by, for example, a process described below. According to one preferred process, when the formation of one cured layer 220 is finished, the three-dimensional shaping device 10 raises the supply table 22 and lowers the shaping table 32. At the time when the formation of one cured layer 220 is finished, a top surface of the powder material 200 on the supply table 20 is at the same level as that of the bottom end of the stacking roller 51. At this point, a top surface of the cured layer 220 formed as a top layer in the shaping tank 30 is also at the same level as that of the bottom end of the stacking roller 51.

When the supply table 22 is raised from this state, a top portion of the powder material 200 partially spills over the supply tank 20. The portion of the powder material 200 spilling over the supply tank 20 is to be supplied from the supply tank 20. The shaping table 32 lowers by a predetermined distance from the above-mentioned state. This predetermined distance is the same as a thickness of the cured layer 220 to be formed next. When the powder material 200 is to be supplied, the shaping table 32 lowers by the thickness of one cured layer 220.

After this, the three-dimensional shaping device 10 controls the moving device 80 to move the stacking roller 51 rightward. As a result of this movement, the stacking roller 51 moves to a position above the recovery tank 40 from a position to the left of the supply tank 20 via positions above the supply tank 20 and the shaping tank 30. At this point, the stacking roller 51 rotates in a direction opposite to the moving direction. As a result of the movement and the rotation of the stacking roller 51, a new portion of the powder material 200 is spread on the shaping table 32. As a result, a new powder layer 210 is formed on the shaping table 32. The portion, of the powder material 200, that is left non-spread is dropped into the recovery tank 40.

The three-dimensional shaping device 10 sequentially injects the curing liquid onto a predetermined site on the powder layer 210 while forming a new powder layer 210 on the cured layer 220 as described above. As a result, a new cured layer 220 is formed at the powder layer 210. This process is repeated, and as a result, the shaped item 230 is completed. Such a process is merely a preferred example, and the process of forming the shaped item 230 is not limited to this.

### [Configuration of the operation box]

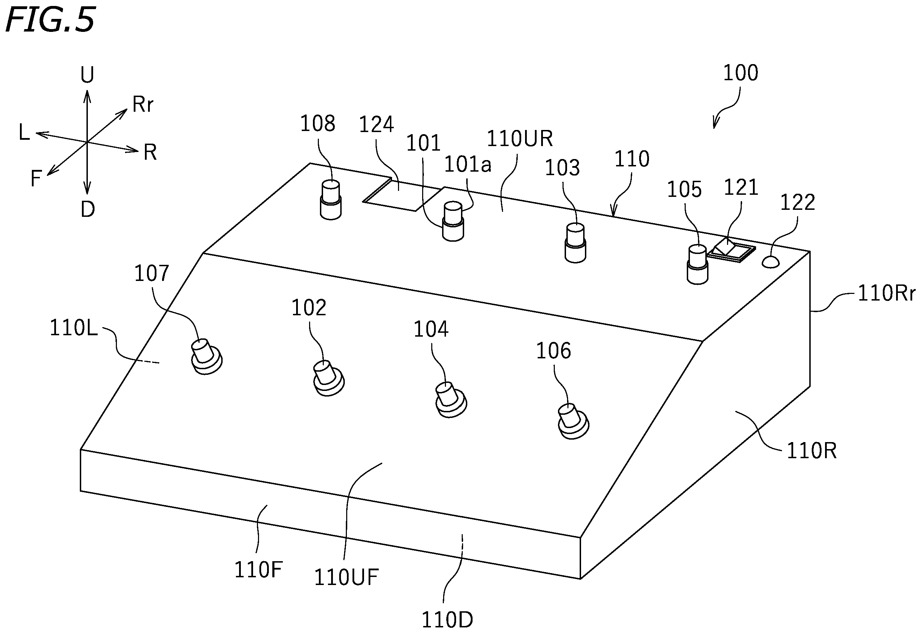

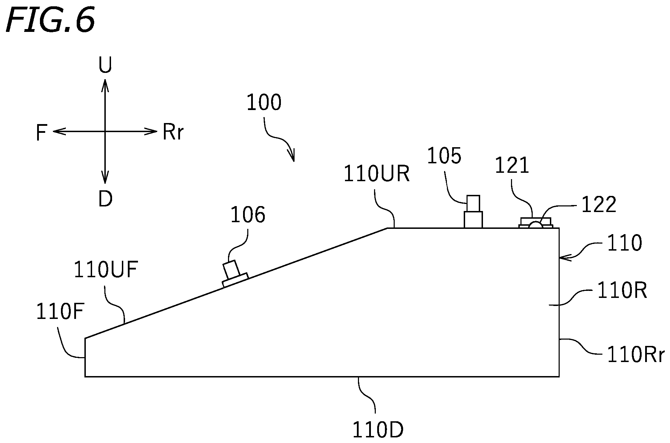

Hereinafter, the configuration of the operation box 100 will be described in detail. Fig. 5 is a perspective view of the operation box 100. Fig. 6 is a side view of the operation box 100. Fig. 5 and Fig. 6 show a case where the operation box 100 is installed such that a front side thereof matches a front side of the three-dimensional shaping device 10. The directions in the following description are directions in a case where the operation box 100 is installed such that the front side thereof matches the front side of the three-dimensional shaping device 10. It is preferred that the operation box 100 is oriented as described above, but the orientation thereof is not limited to the above. The operation box 100 is wirelessly connected with the controller 90, and may be located in any orientation with respect to the three-dimensional shaping device 10.

The operation box 100 is an operation tool including footstep switches 101 through 106 capable of operating the supply tank 20, the shaping tank 30 and the recovery tank 40. The operation box 100 is installed on a floor on which the three-dimensional shaping device 10 is installed or at a site of a level closer to that of the floor (see Fig. 3; in Fig. 3, the operation box 100 is installed beyond the main body 11 as seen on the sheet of Fig. 3, that is, on the front side of the three-dimensional shaping device 10). The operation box 100 includes a casing 110 supporting the footstep switches 101 through 106, and the like. As shown in Fig. 5 and Fig. 6, the casing 110 includes a bottom surface 110D, a left side surface 110L, a right side surface 110R, a front surface 110F, a rear surface 110Rr, a top panel 110UR, and a front panel 110UF.

The bottom surface 110D is a plate-like member formed to have a flat rectangular shape that is longer in the left-right direction than in the front-rear direction. The bottom surface 110D extends in the left-right direction and in the front-rear direction. The operation box 100 is installed such that the bottom surface 110D is in contact with the floor or the like. A front end of the bottom surface 110D is connected with a bottom end of the front surface 110F. The front surface 110F extends upward from the front end of the bottom surface 110D. The front surface 110F extends in the left-right direction and in the up-down direction. A left end of the bottom surface 110D is connected with a bottom end of the left side surface 110L. The left side surface 110L extends upward from the left end of the bottom surface 110D. The left side surface 110D extends in the front-rear direction and in the up-down direction. A right end of the bottom surface 110D is connected with a bottom end of the right side surface 110R. The right side surface 110R extends upward from the right end of the bottom surface 110D. The right side surface 110R extends in the front-rear direction and in the up-down direction. A rear end of the bottom surface 110D is connected with a bottom end of the rear surface 110Rr. The rear surface 110Rr extends upward from the rear end of the bottom surface 110D. The rear surface 110Rr extends in the left-right direction and in the up-down direction. A left end and a right end of the rear surface 110Rr are respectively connected with a rear end of the left side surface 110L and a rear end of the right side surface 110R.

As shown in Fig. 6, the right side surface 110R has a substantially pentagonal shape with a front top side inclining. Similarly, the left side surface 110L has a substantially pentagonal shape with a front top side inclining. The front surface 110F extends to the level same as the level to which a side, of the left side surface 110L, that extends substantially vertically and is below the inclining side extends, and also to the level same as the level to which a side, of the right side surface 110R, that extends substantially vertically and is below the inclining side extends.

The top panel 110UR is a substantially rectangular panel provided substantially horizontally. A rear end of the top panel 110UR is connected with a top end of the rear surface 110Rr. A left end of the top panel 110UR is connected with a top end of the left side surface 110L, and a right end of the top panel 110UR is connected with a top end of the right side surface 110R. The front panel 110UF is a substantially rectangular panel inclining forward and downward from the top panel 110UR and connected with the front surface 110F. A left end of the front panel 110UF is connected with the inclining side of the left side surface 110L. A right end of the front panel 110UF is connected with the inclining side of the right side surface 110R. A rear end of the front panel 110UF is connected with a front end of the top panel 110UR. A front end of the front panel 110UF is connected with a top end of the front surface 110F.

The operation box 100 includes a footstep switch group including the plurality of footstep switches 101 through 106, as well as a speed switch 107 switching a speed of the supply table 22, the shaping table 32 or the recovery table 42 to a high speed or a low speed when one of the footstep switches 101 through 106 is stepped on and also a function switch 108 switching the state of a predetermined program function to a use state or a non-use state. The operation box 100 further includes a power switch 121, a power lamp 122, a buzzer 123 (see Fig. 4), a wireless communicator 124, and a program controller 125 (see Fig. 4).

The power switch 121 is supported by the top panel 110UR so as to be exposed outside. In this embodiment, the power switch 121 is provided in the vicinity of a right rear corner of the top panel 110UR. Note that the power switch 121 is not limited to being positioned on the top panel 110UR. The power switch 121 does not need to be configured or located so as to be easily operable by a foot. When the power switch 121 is turned ON, the wireless communicator 124 is started to make the operation box 100 usable and the power lamp 122 is lit up. The wireless communicator 124 sends an operation signal to the controller 90 by wireless communication. The power lamp 122 is located at a position that is on the top panel 110UR and is in the vicinity of the power switch 121.

The footstep switch 101 is a switch that raises the supply table 22 when being stepped on. Hereinafter, the footstep switch 101 will also be referred to as a "supply table raising switch 101". The supply table raising switch 101 is provided on a left area of the top panel 110UR. The top panel 110UR supports the supply table raising switch 101 such that the supply table raising switch 101 is exposed outside. The supply table raising switch 101 is a momentary switch, which is ON only while being stepped on. The supply table 22 is raised only while the supply table raising switch 101 is ON, that is, only while the supply table raising switch 101 is stepped on. The supply table raising switch 101 is turned ON by a shaft 101a, movable in the up-down direction, being stepped on. Note that the supply table raising switch 101 merely needs to be a momentary footstep switch, and there is no specific limitation on the configuration thereof. In this embodiment, the footstep switches 101 through 106 are of the same type as each other. However, the footstep switches 101 through 106 each merely need to be a momentary footstep switch, and do not need to be of the same type as each other.

The footstep switch 102 is a switch that lowers the supply table 22 when being stepped on. Hereinafter, the footstep switch 102 will also be referred to as a "supply table lowering switch 102". The supply table lowering switch 102 is provided on a left area of the front panel 110UF. The front panel 110UF supports the supply table lowering switch 102 such that the supply table lowering switch 102 is exposed outside. The supply table lowering switch 102 is supported by the front panel 110UF to be located to the front of the supply table raising switch 101 in the operation box 100. The supply table lowering switch 102 is located below the supply table raising switch 101. The supply table raising switch 101 and the supply table lowering switch 102 are aligned with each other in the left-right direction.

The supply table 22 may be raised or lowered by an operation by the user for, for example, replenishing the powder material 200 to the supply tank 20. In the three-dimensional shaping device 10 according to this embodiment, the supply table 22 can be raised or lowered by the user stepping on the supply table raising switch 101 or the supply table lowering switch 102.

The footstep switch 103 is a switch that raises the shaping table 32 by being stepped on. Hereinafter, the footstep switch 103 will also be referred to as a "shaping table raising switch 103". The shaping table raising switch 103 is provided on a central area, in the left-right direction, of the top panel 110UR. The shaping table raising switch 103 is located to the right of the supply table raising switch 101. The top panel 110UR supports the shaping table raising switch 103 such that the shaping table raising switch 103 is exposed outside.

The footstep switch 104 is a switch that lowers the shaping table 32 by being stepped on. Hereinafter, the footstep switch 104 will also be referred to as a "shaping table lowering switch 104". The shaping table lowering switch 104 is provided on a central area, in the left-right direction, of the front panel 110UF. The front panel 110UF supports the shaping table lowering switch 104 such that the shaping table lowering switch 104 is exposed outside. The shaping table lowering switch 104 is supported by the front panel 110UF to be located to the front of the shaping table raising switch 103 in the operation box 100. The shaping table lowering switch 104 is located below the shaping table raising switch 103. The shaping table raising switch 103 and the shaping table lowering switch 104 are aligned with each other in the left-right direction.

The shaping table 32 may be raised or lowered by an operation by the user for, for example, taking out the shaped item 230 from the shaping tank 30. In the three-dimensional shaping device 10 according to this embodiment, the shaping table 32 can be raised or lowered by the user stepping on the shaping table raising switch 103 or the shaping table lowering switch 104.

The footstep switch 105 is a switch that raises the recovery table 42 when being stepped on. Hereinafter, the footstep switch 105 will also be referred to as a "recovery table raising switch 105". The recovery table raising switch 105 is provided in the vicinity of a right end of the top panel 110UR. The recovery table raising switch 105 is provided to the right of the shaping table raising switch 103. The top panel 110UR supports the recovery table raising switch 105 such that the recovery table raising switch 105 is exposed outside.

The footstep switch 106 is a switch that lowers the recovery table 42 by being stepped on. Hereinafter, the footstep switch 106 will also be referred to as a "recovery table lowering switch 106". The recovery table lowering switch 106 is provided in the vicinity of the right end of the front panel 110UF. The front panel 110UF supports the recovery table lowering switch 106 such that the recovery table lowering switch 106 is exposed outside. The recovery table lowering switch 106 is supported by the front panel 110UF to be located to the front of the recovery table raising switch 105 in the operation box 100. The recovery table lowering switch 106 is located below the recovery table raising switch 105. The recovery table raising switch 105 and the recovery table lowering switch 106 are aligned with each other in the left-right direction.

The recovery table 42 may be raised or lowered by an operation by the user for, for example, recovering the powder material 200 from the recovery tank 40 (after this, the powder material 200 is, for example, dried to be reused). In the three-dimensional shaping device 10 according to this embodiment, the recovery table 42 can be raised or lowered by the user stepping on the recovery table raising switch 105 or the recovery table lowering switch 106.

The switches 101 and 102 operating the supply table 22, the switches 103 and 104 operating the shaping table 32, and the switches 105 and 106 operating the recovery table 42 are lined up in the operation box 100 in the same order as that of the supply tank 20, the shaping tank 30 and the recovery tank 40. In more detail, the switches 101 and 102 operating the supply table 22, the switches 103 and 104 operating the shaping table 32, and the switches 105 and 106 operating the recovery table 42 are lined up in the same order as that of the supply tank 20, the shaping tank 30 and the recovery tank 40 when the operation box 100 is installed such that the front side of the operation box 100 matches the front side of the three-dimensional shaping device 10.

The speed switch 107 is a switch switching an operation amount per time while any of the footstep switches 101 through 106 is stepped on continuously, to two speeds; in this embodiment, to a high speed or a low speed. In this embodiment, the speed switch 107 switches the operation mode to a high speed mode when being stepped on in a low speed mode, and switches the operation mode to the low speed mode when being stepped on in the high speed mode. The operation mode is switched to the high speed mode, so that the supply table 22, the shaping table 32 or the recovery table 42 may be moved in a shorter period of time. The operation mode is switched to the low speed mode, so that the position of the supply table 22, the shaping table 32 or the recovery table 42 may be adjusted more precisely. In this embodiment, the speed switch 107 is provided at a position that is in the vicinity of the left end of the front panel 110UF and is to the left of the supply table lowering switch 102. Note that there is no specific limitation on the position of the speed switch 107 as long as the speed switch 107 can be stepped on.

The speed switch 107 may be configured to switch the operation amount per time while any of the footstep switches 101 through 106 is stepped on continuously, to three or more speeds (i.e., to a high speed, a middle speed or a low speed). It is sufficient that the speed switch 107 is configured to switch the operation amount per time while any of the footstep switches 101 through 106 is stepped on continuously, to at least two speeds.

The program controller 125 is configured to be capable of setting an operation amount of one stepping operation for at least one of the footstep switches 101 through 106. The operation amount of one stepping operation is set, so that, for example, each time the supply table raising switch 101 is stepped on, the supply table 22 may be raised by a predetermined distance (e.g., 1 mm). This is applicable to the other footstep switches 102 through 106. The operation amount of one stepping operation may be varied for raising the supply table 22, for lowering the supply table 22, for raising the shaping table 32, for lowering the shaping table 32, for raising the recovery table 42 or for lowering the recovery table 42. When the function switch 108 is stepped on in a state where the operation amount of one stepping operation is set to OFF (hereinafter, this state will also be referred to as a "function-OFF state"), the function is turned ON. When the function switch 108 is stepped on in a function-ON state, the function is turned OFF.

In this embodiment, the function switch 108 is provided at a position that is in the vicinity of the left end of the top panel 110UR and is to the left of the supply table raising switch 101. Note that there is no specific limitation on the position of the function switch 108 as long as the function switch 108 can be stepped on.

The buzzer 123 is configured to ring while any of the footstep switches 101 through 106 is stepped on. The three-dimensional shaping device 10 notifies the user and the vicinity thereof by the ring of the buzzer 123 that the supply table 22, the shaping table 32 or the recovery table 42 is moving. The buzzer sound may be different in accordance with the operation that is being performed. The notification does not need to be made by a busser sound, and may be made by a verbal announcement that, for example, "the supply table is now being raised". Instead of, or in addition to, the ring of the buzzer 123, an alarm lamp may be lit up. The buzzer 123 may be provided in the main body 11 of the three-dimensional shaping device 10 instead of in the operation box 100.

### [Functions and effects of the embodiment]

Hereinafter, the functions and the effects provided by the three-dimensional shaping device 10 according to this embodiment will be described.

The three-dimensional shaping device 10 according to this embodiment includes the supply tank 20 supplying the powder material 200; the shaping tank 30 including a shaping table 32 configured to move in the up-down direction, the shaping table 32 having the shaped item 230 shaped thereon of the powder material 200; a layer formation device (in this embodiment, the roller unit 50 and the moving device 80) flattening the powder material 200, supplied by the supply tank 20, on the shaping table 32; the injection head 60 injecting a curing liquid, curing the powder material 200, onto the powder material 200 on the shaping table 32; the controller 90 controlling the supply tank 20, the shaping tank 30, the layer formation device (the roller unit 50 and the moving device 80) and the injection head 60; and the operation box 100 wirelessly connected with the controller 90. The operation box 100 includes footstep switches 101 through 104 capable of operating the supply tank 20 and the shaping tank 30 via the controller 90 when being stepped on. Whether or not the recovery tank 40 is provided, and whether or not the recovery table 42 of the recovery tank 40 is made movable in the up-down direction, are optional. In the case where the recovery table 42 is not made movable, there is no need to provide the footstep switch 105 or 106 operating the recovery table 42.

According to the three-dimensional shaping device 10 having such a configuration, the user steps on the footstep switches 101 through 106 by his/her foot to operate the supply tank 20, the shaping tank 30 and the recovery tank 40. Therefore, the attachment of the powder material 200 to the three-dimensional shaping device 10 is suppressed.

In a conventional three-dimensional shaping device in which the powder material is cured, the manual operation is performed by use of, for example, a device operable by the user's hand, such as an operation panel or the like. However, in the case where the user manually operates the three-dimensional shaping device immediately after, for example, handling the powder material, when the user touches the panel or the like, the powder material attached to the user is attached to the panel or the like. In order to avoid this, the user has to remove the powder material attached to himself/herself before manually operating the three-dimensional shaping device. This may be troublesome.

By contrast, the three-dimensional shaping device 10 according to this embodiment allows the operation box 100 to be operated by the foot. Therefore, the attachment of the powder material 200 to the three-dimensional shaping device 10, in more detail, the operation box 100 is suppressed. Even though the user handles the powder material 200, the amount of the powder material 200 attached to his/her foot is significantly smaller than the amount of the powder material 200 attached to his/her hand in many cases. The user is allowed to operate the supply tank 20 and the shaping tank 30 with no need to remove the powder material 200 attached to his/her hand.

In this embodiment, the operation box 100 is wirelessly connected with the controller 90. According to this configuration, the degree of freedom of the position where the operation box 100 is placed is high, which is highly convenient. The operation box 100 may be connected with the controller 90 in a wired manner.

In this embodiment, the footstep switches 101 through 106 include the shaping table raising switch 103 raising the shaping table 32 and the shaping table lowering switch 104 lowering the shaping table 32. According to this configuration, the shaping table 32, which is operated manually highly frequently, is operable by the footstep switches 103 and 104. Therefore, the three-dimensional shaping device 10 is operated without the powder material 200 being attached thereto in many occasions. Such a function and effect is applicable to the supply table raising switch 101 and the supply table lowering switch 102, and also to the recovery table raising switch 105 and the recovery table lowering switch 106.

In this embodiment, the shaping table lowering switch 104 is located to the front of the shaping table raising switch 103 in the operation box 100. According to this configuration, the user perceptually grasps which of the front switch and the rear switch is the shaping table lowering switch 104 or the shaping table raising switch 103. Therefore, the user remembers easily which of the front switch and the rear switch is the shaping table lowering switch 104 or the shaping table raising switch 103 with a low possibility of being mistaken. Such a function and effect is applicable to the supply table raising switch 101 and the supply table lowering switch 102, and also to the recovery table raising switch 105 and the recovery table lowering switch 106.

In this embodiment, the shaping table lowering switch 104 is located below the shaping table raising switch 103. According to this configuration, the user perceptually grasps which of the lower switch and the upper switch is the shaping table lowering switch 104 or the shaping table raising switch 103. Therefore, the user remembers easily which of the lower switch and the upper switch is the shaping table lowering switch 104 or the shaping table raising switch 103 with a low possibility of being mistaken. Such a function and effect is applicable to the supply table raising switch 101 and the supply table lowering switch 102, and also to the recovery table raising switch 105 and the recovery table lowering switch 106.

In this embodiment, the operation box 100 includes the top panel 110UR provided substantially horizontally and supporting the shaping table raising switch 103 and the front panel 110UF inclining forward and downward from the top panel 110UR and supporting the shaping table lowering switch 104. According to this configuration, the shaping table lowering switch 104 is located to the front of, and below, the shaping table raising switch 103, and no step is formed in the casing 110. Therefore, the shaping table lowering switch 104 and the shaping table raising switch 103 are easily operable. Such a function and effect is applicable to the supply table raising switch 101 and the supply table lowering switch 102, and also to the recovery table raising switch 105 and the recovery table lowering switch 106.

In this embodiment, the switches 101 and 102 operating the supply table 22, the switches 103 and 104 operating the shaping table 32, and the switches 105 and 106 operating the recovery table 42 are lined up in the operation box 100 in the same order as that of the supply tank 20, the shaping tank 30 and the recovery tank 40. Therefore, the user perceptually grasps which of the footstep switches are for operating the supply tank 20, the shaping tank 30 or the recovery tank 40. Accordingly, the user remembers easily which of the footstep switches are for operating the supply tank 20, the shaping tank 30 or the recovery tank 40 with a low possibility of being mistaken.

In this embodiment, the operation box 100 includes the speed switch 107 switching the operation amount per time while any of the footstep switches 101 through 106 is stepped on continuously, to at least two speeds. According to this configuration, the speed switch 107 is operable to increase the operation amount per time, so that the supply table 22, the shaping table 32 or the recovery table 42 may be moved in a shorter period of time. The speed switch 107 is operable to decrease the operation amount per time, so that the position of the supply table 22, the shaping table 32 or the recovery table 42 may be adjusted more precisely. That is, the speed at which the supply table 22, the shaping table 32 or the recovery table 42 moves is made appropriate in accordance with the use thereof.

According to this embodiment, the operation box 100 includes the program controller 125 capable of setting the operation amount of one stepping operation for at least one of the footstep switches 101 through 106. According to this configuration, each time any one of the footstep switches 101 through 106 is stepped on, the supply table 22, the shaping table 32 or the recovery table 42 is moved by a predetermined distance. Therefore, the position of the supply table 22, the shaping table 32 or the recovery table 42 is adjusted easily. The program controller 125 may be provided in the controller 90.

In this embodiment, the three-dimensional shaping device 10 includes a sound production device (in this embodiment, the buzzer 123) producing a sound while any of the footstep switches 101 through 106 is stepped on. According to this configuration, it is notified to the user and the vicinity thereof by the sound that the supply table 22, the shaping table 32 or the recovery table 42 is moving.

### [Other embodiments]

Some preferred embodiments of the present invention are described above. The above-described embodiments are merely examples, and the present invention may be carried out in any of various other embodiments.

For example, in the above-described embodiments, the operation box 100 is configured to be freely movable as long as being connected with the controller 90. Alternatively, the operation box 100 may be secured and immovable. In this case also, it is preferred that the operation box 100 is located at a position in the up-down direction at which the operation box 100 is operable by the user's foot; for example, is located in contact with a floor.

In the above-described embodiments, the supply table 22, the shaping table 32 and the recovery table 42 are operated by the footstep switches 101 through 106 of the operation box 100. Other elements may be operated by the footstep switches 101 through 106 of the operation box 100. The footstep switches may be configured to be capable of operating, via the controller, at least one of the supply device supplying the powder material, the shaping tank, the layer formation device and the injection heads.

In the above-described embodiments, the three-dimensional shaping device 10 is of a so-called line head system. Alternatively, the three-dimensional shaping device may be of a shuttle head system, by which the carriage having the injection heads mounted thereon moves back and forth. The moving device may move the supply tank, the shaping tank and the recovery tank instead of the injection heads and the roller unit. The supply device of the powder material is not limited to having a configuration of the supply tank 20. For example, the supply device may cause the powder material to be dropped from above. The other configurations of the three-dimensional shaping device 10 described above are merely examples. The technology of the present invention is not limited by the embodiments.

### Reference Signs List

- 10: three-dimensional shaping device
- 20: supply tank (powder supply device)
- 22: supply table
- 30: shaping tank
- 32: shaping table
- 40: recovery tank
- 42: recovery table
- 50: roller unit (layer formation device)
- 60: injection head
- 80: moving device (layer formation device)
- 90: controller
- 100: operation box
- 101: supply table raising switch (footstep switch)
- 102: supply table lowering switch (footstep switch)
- 103: shaping table raising switch (footstep switch)
- 104: shaping table lowering switch (footstep switch)
- 105: recovery table raising switch (footstep switch)
- 106: recovery table lowering switch (footstep switch)
- 107: speed switch
- 108: function switch
- 110UF: front panel
- 110UR: top panel
- 123: buzzer (sound production device)
- 125: program controller (setting device)
- 200: powder material
- 230: shaped item

## Claims

1. A three-dimensional shaping device, comprising:
a powder supply device supplying a powder material;
a shaping tank including a shaping table configured to move in an up-down direction, the shaping table having a shaped item shaped thereon of the powder material;
a layer formation device flattening the powder material, supplied by the powder supply device, on the shaping table;
an injection head injecting a curing liquid, curing the powder material, onto the powder material on the shaping table;
a controller controlling the powder supply device, the shaping tank, the layer formation device and the injection head; and
an operation box including footstep switches capable of operating, via the controller, at least one of the powder supply device, the shaping tank, the layer formation device and the injection head when being stepped on, the operation box being connected with the controller in a wired or wireless manner.

2. The three-dimensional shaping device according to claim 1, wherein the operation box is connected with the controller wirelessly.

3. The three-dimensional shaping device according to claim 1 or 2, wherein the footstep switches include:
a switch raising the shaping table, and
a switch lowering the shaping table.

4. The three-dimensional shaping device according to claim 3, wherein the switch lowering the shaping table is located to the front of the switch raising the shaping table in the operation box.

5. The three-dimensional shaping device according to claim 4, wherein the switch lowering the shaping table is located below the switch raising the shaping table.

6. The three-dimensional shaping device according to claim 5, wherein the operation box includes:
a top panel provided substantially horizontally and supporting the switch raising the shaping table, and
a front panel inclining forward and downward from the top panel and supporting the switch lowering the shaping table.

7. The three-dimensional shaping device according to any one of claims 1 through 6, wherein:
the powder supply device includes a supply table configured to move in the up-down direction, the supply table having the powder material placed thereon, and
the footstep switches include:
a switch raising the supply table, and
a switch lowering the supply table.

8. The three-dimensional shaping device according to claim 7, wherein the switch lowering the supply table is located to the front of the switch raising the supply table in the operation box.

9. The three-dimensional shaping device according to claim 8, wherein the switch lowering the supply table is located below the switch raising the supply table.

10. The three-dimensional shaping device according to claim 9, wherein the operation box includes:
a top panel provided substantially horizontally and supporting the switch raising the supply table, and
a front panel inclining forward and downward from the top panel and supporting the switch lowering the supply table.

11. The three-dimensional shaping device according to any one of claims 1 through 10, further comprising a recovery tank including a recovery table onto which a remaining portion, of the powder material transferred by the layer formation device, that remains after a portion of the powder material is flattened on the shaping table is dropped, wherein:
the recovery table is configured to move in the up-down direction, and
the footstep switches include:
a switch raising the recovery table, and
a switch lowering the recovery table.

12. The three-dimensional shaping device according to claim 11, wherein the switch lowering the recovery table is located to the front of the switch raising the recovery table in the operation box.

13. The three-dimensional shaping device according to claim 12, wherein the switch lowering the recovery table is located below the switch raising the recovery table.

14. The three-dimensional shaping device according to claim 13, wherein the operation box includes:
a top panel provided substantially horizontally and supporting the switch raising the recovery table, and
a front panel inclining forward and downward from the top panel and supporting the switch lowering the recovery table.

15. The three-dimensional shaping device according to any one of claims 1 through 14, further comprising a recovery tank including a recovery table onto which a remaining portion, of the powder material transferred by the layer formation device, that remains after a portion of the powder material is flattened on the shaping table is dropped, wherein:
the recovery table is configured to move in the up-down direction, and
the powder supply device includes a supply table configured to move in the up-down direction, the supply table having the powder material placed thereon,
the powder supply device, the shaping tank and the recovery tank are lined up in this order,
the footstep switches include:
switches operating the supply table,
switches operating the shaping table, and
switches operating the recovery table, and
the switches operating the supply table, the switches operating the shaping table, and the switches operating the recovery table are lined up in the operation box in the same order as that of the powder supply device, the shaping tank and the recovery tank.

16. The three-dimensional shaping device according to any one of claims 1 through 15, wherein the operation box includes a speed switch switching an operation amount per time while any of the footstep switches is stepped on continuously, to at least two speeds.

17. The three-dimensional shaping device according to any one of claims 1 through 16, wherein the operation box or the controller includes a setting device capable of setting an operation amount of one stepping operation for at least one of the footstep switches.

18. The three-dimensional shaping device according to any one of claims 1 through 17, further comprising a sound production device producing a sound while any of the footstep switches is stepped on.
